# EUROPÄISCHE PATENTSCHRIFT

(11) **EP 3 037 259 B1**
(45) Veröffentlichungstag und Bekanntmachung des Hinweises auf die Patenterteilung: **20.03.2019**
(21) Anmeldenummer: 14199861.7
(22) Anmeldetag: 22.12.2014
(51) Int. Cl.: B32B 5/18, B32B 5/32, B32B 27/04, B32B 27/40

(54) **Sandwichbauteil**
Sandwich component
Élément sandwich

(43) Veröffentlichungstag der Anmeldung: 29.06.2016
(73) Patentinhaber: Magna Steyr Fahrzeugtechnik AG & Co KG, 8041 Graz (AT)
(72) Erfinder: Wolfsberger, Günter, 8501 Lieboch (AT)
(74) Vertreter: Zangger, Bernd

(56) Entgegenhaltungen:
- DE-A1-102012 220 305

## Beschreibung

### Gebiet der Erfindung

Die vorliegende Erfindung betrifft ein Sandwichbauteil, insbesondere für den Einsatz im Fahrzeugbau.

### Stand der Technik

Unter einem Sandwichbauteil ist in der Regel ein Bauteil zu verstehen, das aus Schichten gleicher oder unterschiedlicher Werkstoffe zusammengesetzt ist. Im einfachsten Fall bestehen Sandwichbauteile aus zwei Deckschichten, einer oberen Deckschicht und einer unteren Deckschicht, sowie einer Kernschicht, die zwischen der oberen Deckschicht und der unteren Deckschicht angeordnet ist. Die Deckschichten sind faser- und/oder gewebeartig ausgebildet und können von einem klebstoffartigen Matrixmaterial durchdrungen werden. Eine letztendliche Verbindung zwischen den einzelnen Schichten erfolgt meist durch Verpressen mittels eines geeigneten Werkzeugs, wie zum Beispiel einer Presse.

Derartige Sandwichbauteile finden in vielen unterschiedlichen Branchen Anwendung. In den letzten Jahren ist ihre Bedeutung jedoch insbesondere als Strukturbauteil im Bereich des Automobil-Leichtbaus enorm gestiegen.

Der Stand der Technik offenbart eine Vielzahl von unterschiedlichen Ansätzen zur Herstellung von Strukturbauteilen.

Um eine dauerhafte Verbindung zwischen der oberen und unteren Deckschicht und der Kernschicht zu erzielen werden Matrizen, insbesondere klebstoffartige Harze, verwendet, die beim Verpressen der Deckschichten und der Kernschicht durch die Deckschichten "gepresst" werden und so eine Verbindung zwischen den Deckschichten und der Kernschicht herstellen. Der Auftrag des Matrixmaterials erfolgt dabei lediglich außen auf der äußersten Deckschicht. Dabei wird in der Regel ein Überschuss an Matrixmaterial aufgetragen um beim Verpressen der einzelnen Schichten ein zuverlässiges Durchdringen der Deckschichten mit Matrixmaterial zu gewährleisten.

Bei Herstellung eines Sandwichbauteils nach einem wie oben kurz beschriebenen Verfahren ergibt sich der Nachteil, dass lediglich eine Art (in Bezug auf Zusammensetzung und Auftragungsdicke) von Matrixmaterialauf die äußerste Deckschicht aufgetragen werden kann. Zudem kann je nach Viskosität des Matrixmaterials und Durchlässigkeit der Deckschicht ein zu tiefes Eindringen des Matrixmaterials in die Kernschicht erfolgen und die Kernschicht unkontrolliert durchdringen. Um dies zu verhindern wird nach Stand der Technik oftmals zwischen der Deckschicht und der Kernschicht eine Sperrschicht angeordnet, die für das Matrixmaterial undurchlässig ist. Diese Sperrschicht muss jedoch in den meisten Fällen in einem separaten Arbeitsvorgang an die Kernschicht geklebt werden.

Aus der DE 10 2012 220 305 A1 ist ein Sandwichbauteil für ein Kraftfahrzeug bekannt, mit einer Kunststoffschicht, die eine sichtbare Oberfläche aufweist, einer Faserverbundschicht, die auf einer der sichtbaren Oberfläche gegenüberliegenden Seite der Kunststoffschicht angeordnet ist, einem Kern, der an der Faserbundschicht angeordnet ist, wobei der Kern aus einem Metallschaum mit einer offenporigen Struktur ausgebildet ist. Der Kern kann auch zwischen einer ersten Faserverbundschicht, die mit der Kunststoffschicht in Verbindung steht und einer zweiten Faserverbundschicht angeordnet sein.

### Aufgabenstellung

Aufgabe der Erfindung ist es ein verbessertes Sandwichbauteil vorzuschlagen, das insbesondere in Bezug auf die Notwendigkeit unterschiedlichste technische und optische Anforderungen zu erfüllen, einfach und kostengünstig gestaltet ist.

Die Lösung der Aufgabe erfolgt durch ein Sandwichbauteil umfassend zumindest eine Kernschicht und zumindest zwei Faserlagen, wobei zumindest ein Matrixmaterial auf die Ober- und/oder Unterseite zumindest einer der Faserlagen aufgebracht ist, wobei auf zumindest zwei der Faserlagen in unterschiedlicher Weise Matrixmaterial aufgebracht ist und/oder auf zumindest eine der Faserlagen entlang deren Ober- und/oder Unterseite in unterschiedlicher Weise Matrixmaterial aufgebracht ist.

Vorteilhafte Ausgestaltungen der Erfindung sind den abhängigen Patentansprüchen zu entnehmen.

Das erfindungsgemäße Sandwichbauteil umfasst eine Kernschicht und zumindest zwei Faserlagen. Die Faserlagen sind erfindungsgemäß an der Ober- und/oder Unterseite der Kernschicht angeordnet.

Gemäß der Erfindung ist auf die Ober- und/oder Unterseite zumindest einer Faserlage zumindest ein Matrixmaterial aufgebracht, wobei insbesondere auf zumindest zwei Faserlagen in unterschiedlicher Weise Matrixmaterial aufgebracht ist und/oder insbesondere auf zumindest einer Faserlage entlang der Ober- und/oder Unterseite in unterschiedlicher Weise Matrixmaterial aufgebracht ist.

Die Begrifflichkeit "in unterschiedlicher Weise" beschreibt, dass das Matrixmaterial erfindungsgemäß in einer unterschiedlichen Menge und/oder einer unterschiedlichen Art von Matrixmaterial auf die Faserlagen aufgebracht ist.

Das Matrixmaterial somit vorteilhafterweise homogen und/oder inhomogen auf eine oder mehrere Materialbahnen aufgetragen.

Daraus ergibt sich der Vorteil, dass jeweils individuell, angepasst für jede Faserlage, entsprechend den Funktionsanforderungen des Sandwichbauteils, wie beispielsweise partiell unterschiedliche Zonensteifigkeiten und Oberflächenqualitäten, ein jeweiliges Matrixmaterial auf zumindest eine jeweilige Faserlage aufgetragen ist.

Weiters ist durch das individuelle (in verschiedener Weise) Aufbringen des Matrixmaterials auf die einzelnen Materialbahnen, sowie der Anpassung der Eigenschaften des Matrixmaterials (zum Beispiel Viskosität, Thixotropie, Menge) auf das jeweilige Material der Materialbahnen jeweils vergleichsweise nur ein dünner Matrix-Auftrag erforderlich, wodurch sich eine Gewichts- und Funktionsoptimierung ergibt.

Bevorzugt sind die zumindest zwei Faserlagen an einer Seite der Kernschicht angeordnet sind.

Die Faserlagen sind bevorzugt aus Fasermaterial gefertigt und im Vergleich zur Kernschicht vorzugsweise dünn gestaltet. Die dabei benutzen Fasern sind Naturfasern, wie beispielsweise Hanffasern, Bambusfasern, auf Zellulose basierende Fasern etc., und/oder organische sowie anorganische Chemiefasern, wie beispielsweise Polyamidfasern, Glasfasern, Kohlenstofffasern etc..

Das Fasermaterial ist somit bevorzugt aus Fasern aufgebaut, die zu Geweben, Vliesen, Gestricke, Matten, Gitter etc. verarbeitet sind, wobei diese Gebilde bevorzugt in eine je nach Anforderung passende Grundmatrix zu sogenannten Verbundwerkstoffen weiterverarbeitet sind.

Die Faserlagen (aus Fasermaterial) sind in einer vorteilhaften Ausführungsvariante des erfindungsgemäßen Verfahrens vorbehandelt, wobei dabei sämtliche dem Fachmann geläufige Arten der Vorbehandlung, wie beispielsweise Primern, Imprägnieren, Beschichten, etc., in Frage kommen.

Die verwendeten einzelnen Faserlagen können sich voneinander in ihrer (Grund-) Zusammensetzung und Ausgestaltung (Form) unterscheiden.

Bevorzugt sind die Faserlagen als (Fasermaterial-) Bahnen und/oder vorkonfektionierte, der Kontur des Sandwichbauteils entsprechende, (Fasermaterial-) Einzel-Lagen ausgebildet.

Vorteilhafterweise sind die Faserlagen für das Matrixmaterial durchlässig ausgebildet.

Die einzelnen Faserlagen sind in einer optionalen Ausführungsvariante schichtartig ausgebildet, das heißt, dass sie aus zumindest zwei Einzelschichten aufgebaut sind, wobei zumindest eine der Einzelschichten ein Fasermaterial ist.

Einzelschichten, die aus Nicht-Fasermaterial bestehen, sind dabei vorteilhafterweise als Kunststoff-Folien ausgebildet.

Die Kernschicht ist bevorzugt wabenartig ausgebildet. Andere Strukturierungen und Formen der Kernschicht, wie zum Beispiel eine wellenartige Ausbildung, sind jedoch nicht ausgeschlossen.

Die Kernschicht ist bevorzugt aus einem Leichtmaterial, wie beispielsweise einem Polymer (Schaumstoff, Kunststoff, Gummi, etc.), einem zellulose-basierten Material (Papier, Holz, Karton, etc.), einem Verbundwerkstoff oder auch einem Metall, ausgebildet.

In einer weiteren optionalen Ausführung ist die Kernschicht schichtartig ausgebildet - beispielsweise durch mehrere übereinander angeordnete Einzel-Kernschichten. Hierbei können die mindestens zwei Einzel-Kernschichten verschieden voneinander ausgebildet sein. Insbesondere können Wabenkerne mit unterschiedlicher Wabenform, Wabengröße, Wabenausrichtung, unterschiedlichen Steggeometrien und/oder Waben- und/oder Einzel-Kernschichtmaterial gestapelt und miteinander verbunden werden. Dies ist vor allem deshalb vorteilhaft, weil dadurch das spätere fertige Bauteil partiell mit unterschiedlichen Funktions- bzw. Bauteileigenschaften ausgestattet werden kann - einerseits soll das Bauteil eine bestimmte erforderliche Festigkeit und Steifigkeit aufweisen andererseits soll es aber an bestimmten Stellen weiche, leichter verformbare Zonen beinhalten, wie dies beispielsweise im Fahrzeugbereich zur Vermeidung von Verletzungen bei Kollisionen mit Fußgängern vorteilhaft ist.

Bevorzugt sind entlang der Fläche des Sandwichbauteils Zonen mit unterschiedlichen Einzelkernschichten ausgebildet sind, insbesondere mit einer unterschiedlichen Anzahl und/oder Form und/oder materiellen Zusammensetzung.

Die Kernschicht ist vorzugsweise für das Matrixmaterial durchlässig, zumindest jedoch semidurchlässig, ausgebildet.

Das Matrixmaterial ist bevorzugt aus einem thermoplastischen und/oder duroplastischen Kunststoff.

Das Matrixmaterial ist bevorzugt ein Harz, besonders bevorzugt ein Kunstharz (Polyurethan).

Besonders bevorzugt ist das Matrixmaterial klebstoffartig ausgebildet und weist beispielsweise die Hauptkomponenten Harz und Härter auf.

Um die Matrixmaterial-Eigenschaften in Bezug auf diverse Anforderungen, wie beispielsweise Festigkeit oder Elastizität, zu beeinflussen sind dem Matrixmaterial vorteilhafterweise Zusatzkomponenten und/oder -materialien, wie beispielsweise Fasern, zugemischt.

Das Matrixmaterial ist bevorzugt zwischen den Faserlagen und/oder in den Zwischenraum zwischen einer Faserlage und der Kernschicht und/oder außen an der äußersten Faserlage angeordnet.

In einer vorteilhaften Ausführungsform des erfindungsgemäßen Sandwichbauteils ist zwischen den Faserlagen und/oder in den Zwischenraum zwischen einer Faserlage und der Kernschicht und/oder außerhalb der äußersten Faserlage zumindest eine Materiallage, die keine Faserlage ist, angeordnet.

Die Faserlagen, das Matrixmaterial, gegebenenfalls die Materiallage und die Kernschicht sind bevorzugt zu dem Sandwichbauteil verpresst.

Das erfindungsgemäße Sandwichbauteil kann als flächiges Bauteil eines Kraftfahrzeugs verwendet werden, insbesondere als Frontklappe, Tür, Dach, Heckklappe, Ladeboden, Abdeckung, Karosserieboden oder Torsionskasten.

### Kurzbeschreibung der Zeichnungen

Die Erfindung wird im Folgenden beispielhaft unter Bezugnahme auf die Zeichnungen beschrieben.
- FIG. 1: zeigt eine schematische Darstellung eines erfindungsgemäßen Sandwichbauteils vor dem Verpressen
- FIG. 2: zeigt eine schematische Darstellung eines erfindungsgemäßen Sandwichbauteils nach dem Verpressen

### Detaillierte Beschreibung der Erfindung

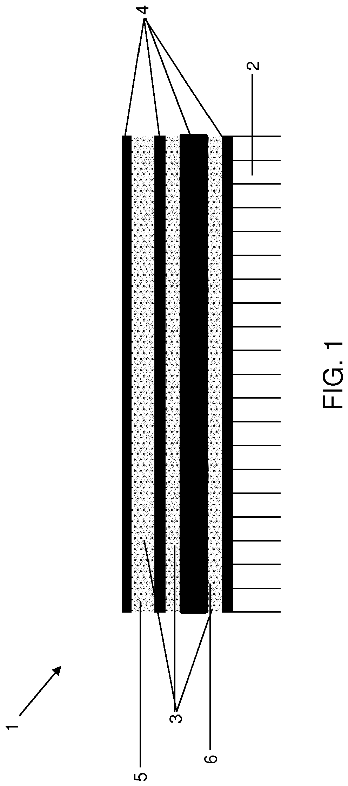

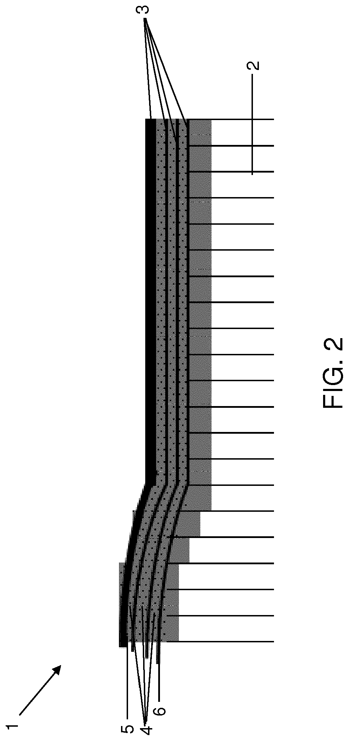

FIG. 1 und FIG. 2 zeigen schematische Darstellungen eines erfindungsgemäßen Sandwichbauteils (1) vor dem Verpressen (FIG.1) und nach dem Verpressen (FIG. 2).

Das in der FIG. 1 schematisch dargestellte Sandwichbauteil 1 weist eine Kernschicht 2 und drei Faserlagen 3 auf. Die Faserlagen 3 sind an der Oberseite der Kernschicht 2 angeordnet.

Auf die Oberseite jeder der drei Faserlagen 3 ist ein Matrixmaterial 4 aufgebracht, wobei zwischen der innersten Faserlage 6 und der Kernschicht 2 ebenso Matrixmaterial 4 angeordnet ist - dieses Matrixmaterial 4 ist auf die Unterseite der innersten Faserlage 6 aufgebracht.

Auf der Oberseite der innersten Faserlage 6 ist in Bezug auf die aufgetragene Menge des Matrixmaterials 4 mehr Matrixmaterial 4 aufgetragen als auf der Oberseite beispielsweise der äußersten Faserlage 5.

Das Matrixmaterial 4 ist somit auf die innerste Faserlage 6 und die äußerste Faserlage 7 "in unterschiedlicher Weise", in diesem schematischen Ausführungsbeispiel in einer unterschiedlichen Menge, aufgebracht.

Die Faserlagen 3 sind als vorkonfigurierte, der Kontur des Sandwichbauteils 1 entsprechende, Einzel-Lagen ausgebildet.

Die Kernschicht 2 ist wabenartig und einteilig ausgeführt, wobei die Waben zur Oberseite hin geöffnet sind und Materialmatrix 4 aufnehmen können.

FIG. 2 zeigt eine schematische Darstellung des Sandwichbauteils 1 nach dem Verpressen.

Das Verpressen erfolgt mittels einer Presse im Nasspressverfahren.

Die Faserlagen 3 sind für das Matrixmaterial 4 durchlässig ausgebildet, wobei das Matrixmaterial 4 durch das Verpressen durch sämtliche Faserlagen 3 gepresst wird.

Aufgrund des gezielten Auftrags von Materialmatrix 4 auf die Faserlagen 3 wird die Kernschicht 2 nur minimal von dem Matrixmaterial 4 durchtränkt, wobei dies auch ausreichend die Anbindung der Faserlagen 3 an die Kernschicht 2 gewährleistet.

### Bezugszeichenliste

- 1: Sandwichbauteil
- 2: Kernschicht
- 3: Faserlage
- 4: Matrix
- 5: Äußerste Faserlage
- 6: Innerste Faserlage

## Patentansprüche

1. Sandwichbauteil (1) umfassend zumindest eine Kernschicht (2) und zumindest zwei Faserlagen (3), wobei zumindest ein Matrixmaterial (4) auf die Ober- und/oder Unterseite zumindest einer der Faserlagen (3) aufgebracht ist,
**dadurch gekennzeichnet, dass** auf zumindest zwei der Faserlagen (3) in unterschiedlicher Weise Matrixmaterial (4) aufgebracht ist und/oder auf zumindest eine der Faserlagen (3) entlang deren Ober- und/oder Unterseite in unterschiedlicher Weise Matrixmaterial (4) aufgebracht ist, wobei das Matrixmaterial (4) dadurch in unterschiedlicher Weise aufgebracht ist, dass das Matrixmaterial (4) in einer unterschiedlichen Menge und/oder unterschiedlichen Art von Matrixmaterial (4) aufgebracht ist.

2. Sandwichbauteil (1) nach Anspruch 1,
**dadurch gekennzeichnet, dass** die zumindest zwei Faserlagen (3) an einer Seite der Kernschicht (2) angeordnet sind.

3. Sandwichbauteil (1) nach einem der Ansprüche 1 bis 2,
**dadurch gekennzeichnet, dass** das Matrixmaterial (4) Fasern umfasst.

4. Sandwichbauteil (1) nach einem der Ansprüche 1 bis 3,
**dadurch gekennzeichnet, dass** das Matrixmaterial (4) ein Harz, insbesondere Polyurethan, umfasst.

5. Sandwichbauteil (1) nach einem der Ansprüche 1 bis 4,
**dadurch gekennzeichnet , dass** das Matrixmaterial (4) zwischen den Faserlagen (3) und/oder in den Zwischenraum zwischen einer Faserlage (3) und der Kernschicht (2) und/oder außen an der äußersten Faserlage (5) angeordnet ist.

6. Sandwichbauteil (1) nach einem der vorhergehenden Ansprüche,
**dadurch gekennzeichnet , dass** die Kernschicht (2) im Wesentlichen wabenartig ausgebildet ist.

7. Sandwichbauteil (1) nach einem der vorhergehenden Ansprüche,
**dadurch gekennzeichnet , dass** die Kernschicht (2) schichtartig, aus zumindest zwei übereinander gestapelten Einzel-Kernschichten, aufgebaut ist.

8. Sandwichbauteil (1) nach Anspruch 7,
**dadurch gekennzeichnet, dass** die Einzel-Kernschichten in Bezug auf ihre Form und materielle Zusammensetzung voneinander unterschiedlich ausgebildet sind.

9. Sandwichbauteil (1) nach Anspruch 7 oder 8,
**dadurch gekennzeichnet, dass** entlang der Fläche des Sandwichbauteils Zonen mit unterschiedlichen Einzelkernschichten ausgebildet sind, insbesondere mit einer unterschiedlichen Anzahl und/oder Form und/oder materiellen Zusammensetzung.

10. Sandwichbauteil (1) nach einem der vorhergehenden Ansprüche,
**dadurch gekennzeichnet, dass** die Kernschicht aus einem Leichtmaterial, bevorzugt einem polymeren Leichtmaterial, aufgebaut ist.

11. Sandwichbauteil (1) nach einem der vorhergehenden Ansprüche,
**dadurch gekennzeichnet, dass** die Kernschicht (2) für das Matrixmaterial (4) durchlässig, zumindest jedoch semidurchlässig, ausgebildet ist.

12. Sandwichbauteil (1) nach einem der vorhergehenden Ansprüche,
**dadurch gekennzeichnet, dass** zwischen den Faserlagen (3) und/oder in den Zwischenraum zwischen einer Faserlage (3) und der Kernschicht (2) und/oder außerhalb der äußersten Faserlage (5) zumindest eine Materiallage, die keine Faserlage (3) ist, angeordnet ist.

13. Sandwichbauteil (1) nach einem der vorhergehenden Ansprüche,
**dadurch gekennzeichnet, dass** die Faserlagen (3), das Matrixmaterial (4), gegebenenfalls die Materiallage und die Kernschicht (2) zu dem Sandwichbauteil (1) verpresst sind.

14. Sandwichbauteil (1) nach einem der vorhergehenden Ansprüche,
**dadurch gekennzeichnet, dass** die Faserlagen (3) als Bahnen oder vorkonfektionierte, der Kontur des Sandwichbauteils entsprechende, Einzel-Lagen ausgebildet sind.

15. Sandwichbauteil (1) nach einem der vorhergehenden Ansprüche,
**dadurch gekennzeichnet, dass** die Faserlagen (3) mittels einer Vorbehandlung vorbehandelt sind.

16. Sandwichbauteil (1) nach einem der vorhergehenden Ansprüche,
**dadurch gekennzeichnet, dass** die Faserlagen (3) für das Matrixmaterial (4) durchlässig ausgebildet sind.

## Claims

1. Sandwich component (1), comprising at least one core layer (2) and at least two fibre layers (3), wherein at least one matrix material (4) is applied onto the upper and/or lower side of at least one of the fibre layers (3),
**characterized in that** matrix material (4) is applied in different ways onto at least two of the fibre layers (3) and/or matrix material (4) is applied in different ways onto at least one of the fibre layers (3) along the upper and/or lower side thereof, wherein the matrix material (4) is applied in different ways **in that** the matrix material (4) is applied in different amounts and/or in different types of matrix material (4).

2. Sandwich component (1) according to Claim 1,
**characterized in that** the at least two fibre layers (3) are disposed on one side of the core layer (2).

3. Sandwich component (1) according to one of Claims 1 and 2,
**characterized in that** the matrix material (4) comprises fibres.

4. Sandwich component (1) according to one of Claims 1 to 3,
**characterized in that** the matrix material (4) comprises a resin, in particular polyurethane.

5. Sandwich component (1) according to one of Claims 1 to 4,
**characterized in that** the matrix material (4) is disposed between the fibre layers (3), and/or in the intermediate space between one fibre layer (3) and the core layer (2), and/or externally on the outermost fibre layer (5).

6. Sandwich component (1) according to one of the preceding claims,
**characterized in that** the core layer (2) is substantially formed in the manner of a honeycomb.

7. Sandwich component (1) according to one of the preceding claims,
**characterized in that** the core layer (2) is constructed in a layered manner from at least two individual core layers which are stacked on top of one another.

8. Sandwich component (1) according to Claim 7,
**characterized in that** the individual core layers with respect to their shape and material composition are configured so as to be different from one another.

9. Sandwich component (1) according to Claim 7 or 8,
**characterized in that** along the face of the sandwich component zones having different individual core layers, in particular having different numbers and/or shapes and/or material compositions, are configured.

10. Sandwich component (1) according to one of the preceding claims,
**characterized in that** the core layer is constructed from a lightweight material, preferably a polymer lightweight material.

11. Sandwich component (1) according to one of the preceding claims,
**characterized in that** the core layer (2) is configured so as to be permeable to the matrix material (4), but at least semi-permeable.

12. Sandwich component (1) according to one of the preceding claims,
**characterized in that** at least one material layer which is not a fibre layer (3) is disposed between the fibre layers (3), and/or in the intermediate space between one fibre layer (3) and the core layer (2), and/or outside of the outermost fibre layer (5).

13. Sandwich component (1) according to one of the preceding claims,
**characterized in that** the fibre layers (3), the matrix material (4), if applicable the material layer, and the core layer (2) are pressed so as to form the sandwich component (1).

14. Sandwich component (1) according to one of the preceding claims,
**characterized in that** the fibre layers (3) are configured as webs or as pre-tailored individual layers which correspond to the contour of the sandwich component.

15. Sandwich component (1) according to one of the preceding claims,
**characterized in that** the fibre layers (3) are pretreated by means of a pretreatment process.

16. Sandwich component (1) according to one of the preceding claims,
**characterized in that** the fibre layers (3) are configured so as to be permeable to the matrix material (4).

## Revendications

1. Composant sandwich (1) comprenant au moins une couche d'âme (2) et au moins deux couches de fibres (3), au moins une matière matricielle (4) étant appliquée sur la face supérieure et/ou inférieure d'au moins l'une des couches de fibres (3), **caractérisé en ce que** sur au moins deux des couches de fibres (3) est appliquée de manière différente une matière matricielle (4) et/ou **en ce que** sur au moins l'une des couches de fibres (3), le long de sa face supérieure et/ou inférieure est appliquée de différente manière une matière matricielle (4), la matière matricielle (4) étant appliquée de manière différente **en ce que** la matière matricielle (4) est appliquée en une quantité différente et/ou en un type différent de matière matricielle (4).

2. Composant sandwich (1) selon la revendication 1, **caractérisé en ce que** les au moins deux couches de fibres (3) sont placées sur une face de la couche d'âme (2).

3. Composant sandwich (1) selon l'une quelconque des revendications 1 à 2, **caractérisé en ce que** la matière matricielle (4) comprend des fibres.

4. Composant sandwich (1) selon l'une quelconque des revendications 1 à 3, **caractérisé en ce que** la matière matricielle (4) comprend une résine, notamment du polyuréthane.

5. Composant sandwich (1) selon l'une quelconque des revendications 1 à 4, **caractérisé en ce que** la matière matricielle (4) est placée entre les couches de fibres (3) et/ou dans l'espace intermédiaire entre une couche de fibres (3) et la couche d'âme (2) et/ou à l'extérieur, sur la couche de fibres (5) la plus externe.

6. Composant sandwich (1) selon l'une quelconque des revendications précédentes, **caractérisé en ce que** la couche d'âme (2) est conçue sensiblement de forme alvéolaire.

7. Composant sandwich (1) selon l'une quelconque des revendications précédentes, **caractérisé en ce que** la couche d'âme (2) est structurée en forme de couches, en au moins deux couches d'âme individuelles empilées l'une sur l'autre.

8. Composant sandwich (1) selon la revendication 7, **caractérisé en ce que** les couches d'âme individuelles sont conçues de manière différente l'une de l'autre au niveau de leur forme et de leur composition matérielle.

9. Composant sandwich (1) selon la revendication 7 ou 8, **caractérisé en ce que** le long de la surface du composant sandwich sont conçues des zones pourvues de couches d'âme individuelles différentes, notamment dans un nombre et/ou dans une forme et/ou de composition matérielle différent(e).

10. Composant sandwich (1) selon l'une quelconque des revendications précédentes, **caractérisé en ce que** la couche d'âme est structurée en une matière légère, de préférence en une matière légère polymère.

11. Composant sandwich (1) selon l'une quelconque des revendications précédentes, **caractérisé en ce que** la couche d'âme (2) pour la matière matricielle (4) est conçue en étant perméable, notamment toutefois semi-perméable.

12. Composant sandwich (1) selon l'une quelconque des revendications précédentes, **caractérisé en ce qu'**entre les couches de fibres (3) et/ou dans l'espace intermédiaire entre une couche de fibre (3) et la couche d'âme (2) et/ou à l'extérieur de la couche de fibre (5) la plus externe est placée au moins une couche de matière qui n'est pas une couche de fibres (3).

13. Composant sandwich (1) selon l'une quelconque des revendications précédentes, **caractérisé en ce que** les couches de fibres (3), la matière matricielle (4), le cas échéant la couche de matière et la couche d'âme (2) sont compressées pour obtenir le composant sandwich (1).

14. Composant sandwich (1) selon l'une quelconque des revendications précédentes, **caractérisé en ce que** les couches de fibres (3) sont conçues sous la forme de bandes ou de couches individuelles préfabriquées, correspondant au contour du composant sandwich.

15. Composant sandwich (1) selon l'une quelconque des revendications précédentes, **caractérisé en ce que** les couches de fibres (3) sont prétraitées au moyen d'un prétraitement.

16. Composant sandwich (1) selon l'une quelconque des revendications précédentes, **caractérisé en ce que** les couches de fibres (3) sont conçues en étant perméables à la matière matricielle (4).
